# EUROPEAN PATENT APPLICATION

(11) **EP 4 733 966 A1**
(43) Date of publication of application: **29.04.2026**
(21) Application number: 24209282.3
(22) Date of filing: 28.10.2024
(51) Int. Cl.: G06F 21/33, H04L 9/32, H04L 9/40, H04W 12/084

(54) **AUTHORISING ACCESS TO COMPUTING RESOURCES**

(71) Applicant: Sage Global Services Limited, Newcastle upon Tyne NE28 9EJ (GB)
(72) Inventor: ROSE, Darrell, Newcastle upon Tyne (GB); MORGAN, Richard, Newcastle upon Tyne (GB)
(74) Representative: Definition IP Limited

(57) **Abstract**

Disclosed herein is a computer implemented method of authorising access to computing resources. The method comprises: receiving user credentials; communicating the user credentials and an authorisation initialisation request for establishing access to the computing resources; verifying the user credentials; creating and storing an authorisation identity which is associated with the authorisation initialisation request; linking a permission set of permissions to access the computing resources to the authorisation identity; generating an authorisation identity token representing the authorisation identity; communicating the authorisation identity token, and storing the authorisation identity token. Storage of the authorisation identity token is such that, to request access to the computing resources the authorisation identity token or a token derived from the authorisation identity token is communicated to a resources server with a resource access request, such that the resource server can authorise the resource access request.

## Description

### Technical Field

The present invention relates to techniques for authorising access to computing resources, and in particular techniques that involve the issuing of authorisation tokens.

### Background

When setting up software applications on specific devices, such as during installation on a desktop or during the initial configuration of a web application, it is often necessary to authorise access to remotely hosted computing resources. A common method for achieving this is by using token-based authorisation protocols, such as OAuth 2.0.

A typical example might be a local installation of accountancy software that needs to periodically synchronise data, such as accounts data, with a centralised database hosted by the provider of the accountancy software and access, via APIs, data processing services provided by the provider of the accountancy software.

Typically, in such examples, a trusted user with sufficient privileges (e.g., an administrator) initiates the authorisation process directly on the device itself. For example, during an installation process, the user physically interacts with the device, entering their credentials into the device's interface. These credentials are then transmitted to a token issuing service, which generates and issues tokens. These tokens commonly come in two forms: access tokens, which are short-lived and grant immediate access to resources, and refresh tokens, which are long-lived and used to obtain new access tokens without re-authentication.

The issued tokens, particularly the refresh token, are often stored locally on the device. This local storage allows the application to maintain access to remote computing resources (e.g., specific data, APIs providing access to services) without requiring the user to re-authenticate frequently.

Conventionally, these tokens are directly linked to the trusted user who initiated the authorisation process. As a result, the tokens inherit all the permissions associated with that user's identity. This approach, while convenient, presents several security concerns. The tokens may grant more permissions than necessary for the specific application or use case. Furthermore, the tokens, especially refresh tokens, can persist on the device for extended periods, potentially outliving the initial use case or the trusted user's involvement.

In many scenarios, the device might eventually be used by someone different from the trusted user who set up the initial installation. However, the stored tokens remain linked to the original user's permissions. This creates a significant security risk, as the broad set of permissions associated with the tokens may allow actions far beyond the intended scope of the desktop installation. For example, they might grant read and write access to all data associated with an account, rather than a limited subset, or allow administrative actions like adding new users or modifying user privileges.

This conventional approach potentially exposes sensitive data and critical system functions to unauthorised users, simply because they have access to a device where these overprivileged tokens are stored. The challenge lies in maintaining the convenience and efficiency of token-based authorisation while implementing more appropriate access controls.

### Summary of the Invention

In accordance with a first aspect of the invention, there is provided a computer implemented method of authorising access to computing resources, said method comprising: receiving, at a computing device, user credentials; communicating, from the computing device to an authorisation server, the user credentials and an authorisation initialisation request for establishing access to the computing resources by the computing device; verifying the user credentials at the authorisation server; creating and storing, at the authorisation server, an authorisation identity which is associated with the authorisation initialisation request; linking, at the authorisation server, a permission set of permissions to access the computing resources to the authorisation identity; generating, at the authorisation server, an authorisation identity token representing the authorisation identity; communicating the authorisation identity token from the authorisation server to the computing device, and storing the authorisation identity token at the computing device. Storage of the authorisation identity token at the computing device is such that, to request access to the computing resources: the authorisation identity token or a token derived from the authorisation identity token is communicated from the computing device to a resources server with a resource access request, such that the resource server can authorise the resource access request by: communicating the authorisation identity token or the token derived from authorisation identity token and the resource access request to the authentication server to determine if the permission set linked to the authorisation identity that is linked to the authorisation identity token, grants permissions that permit resource access in accordance with the resource access request, and if so receiving from the authentication server a validation response in accordance with which the resources server can grant the resource access request.

Optionally, the authorisation initialisation request is a request to initialise authorisation of a software application installed locally on the computing device to access the computing resources.

Optionally, the method further comprises: retrieving, by the authorisation server, the permission set from a permissions server.

Optionally, the method further comprises: receiving, at the computing device, permission selection data indicative of access to subset of the computing resources; communicating the permission selection data to the authorisation server, and retrieving, by the authorisation server, the permission set from the permissions server on the basis of the permission selection data.

Optionally, the permission selection data is indicative of synchronisation access to a specified data set.

Optionally, the method further comprises: at the authorisation server: generating an authorisation instance identifier identifying the authorisation initialisation request; generating authorisation instance identifier metadata indicative of the authorisation instance identifier, and incorporating the authorisation instance identifier metadata with the authorisation identity token.

Optionally, the method further comprises: at the authorisation server: generating user identifier metadata indicative of a user associated with the user credentials, and incorporating the user identifier metadata with the authorisation identity token.

Optionally, the authorisation identity token is a refresh token with which the computing device can subsequently obtain an access token for requesting access to the computing resources.

Optionally, the authorisation identity token is issued in accordance with an identity-based token management protocol.

Optionally, the token issuing protocol is one of OAuth 2.0, OpenID Connect (OIDC), Security Assertion Markup Language (SAML), JSON Web Token (JWT), Kerberos, WS-Federation, and eXtensible Access Control Markup Language (XACML).

In accordance with a second aspect of the invention, there is provided a computer system for authorising access to computing resources, said system comprising an authorisation server and a computing device, said computing device communicatively coupled to the authorisation server, wherein said computing device is configured to receive user credentials and then communicate the user credentials and an authorisation initialisation request for establishing access to the computing resources by the computing device to the authorisation server, responsive to which, the authorisation server is configured to: verify the user credentials; create and store, an authorisation identity which is associated with the authorisation initialisation request; link a permission set of permissions to access the computing resources to the authorisation identity; generate an authorisation identity token representing the authorisation identity; communicate the authorisation identity token to the computing device, responsive to which the computing device is configured to store the authorisation identity token. Storage of the authorisation identity token at the computing device is such that, subsequently the computing device can request access to a computing resource by: communicating the authorisation identity token or a token derived from the authorisation identity token to a resources server with a resource access request, and the resource server can authorise the resource access request by: communicating the authorisation identity token or the token derived from authorisation identity token and the resource access request to the authentication server, whereupon the authentication server can: determine if the permission set linked to the authorisation identity that is linked to the authorisation identity token grants permissions that permit resource access in accordance with the resource access request and if so, communicate a validation response to the resources server in accordance with which the resources server can grant the resource access request.

Optionally, authorisation initialisation request is a request to initialise authorisation of a software application installed locally on the device to access the computing resources.

Optionally, the authorisation server is communicatively connected to a permissions server, and the authorisation server is configured to retrieve the permission set from a permissions server.

Optionally, the computing device is further configured to: receive permission selection data indicative of access to subset of the computing resources; communicate the permission selection data to the authorisation server, and the authorisation server is further configured to: retrieve the permission set from the permissions server on the basis of the permission selection data.

Optionally, the permission selection data is indicative of synchronisation access to a specified data set.

Optionally, the authorisation server is further configured to: generate an authorisation instance identifier identifying the authorisation initialisation request; generate authorisation instance identifier metadata indicative of the authorisation instance identifier, and incorporate the authorisation instance identifier metadata with the authorisation identity token.

Optionally, the authorisation server is further configured to: generate user identifier metadata indicative of a user associated with the user credentials, and incorporate the user identifier metadata with the authorisation identity token.

Optionally, the authorisation identity token is a refresh token with which the computing device can subsequently obtain an access token for requesting access to computing resources.

Optionally, the authorisation server is configured to generate the authorisation identity token in accordance with an identity-based token management protocol.

Optionally, the token issuing protocol is one of OAuth 2.0, OpenID Connect (OIDC), Security Assertion Markup Language (SAML), JSON Web Token (JWT), Kerberos, WS-Federation, and eXtensible Access Control Markup Language (XACML).

In accordance with a third aspect of the invention, there is provided an authorisation server for use in a computer system according to the second aspect, said authorisation server configured to: receive, from a computing device, user credentials and an authorisation initialisation request for establishing access to computing resources by the computing device; verify the user credentials; create and store, an authorisation identity which is associated with the authorisation initialisation request; link a permission set of permissions to access the computing resources to the authorisation identity; generate an authorisation identity token representing the authorisation identity and communicate the authorisation identity token to the computing device for storage at the computing device, and, subsequently, on receipt of the authorisation identity token, or a token derived from authorisation identity token, and the resource access request from a resources server, the authorisation server is configured to: determine if the permission set linked to the authorisation identity that is linked to the authorisation identity token grants permissions that permit resource access in accordance with the resource access request and if so, communicate a validation response to the resources server in accordance with which the resources server can grant the resource access request.

In accordance with certain embodiments of the invention, an authorisation process is provided whereupon receiving an authorisation initialisation request along with verified user credentials by an authentication system, a new identity is created which is linked directly to the authorisation initialisation request itself.

A set of permissions required for accessing computing resources-for example a limited permission set needed for a local software installation on the device-is then assigned to this authorisation identity. Following this, a token is generated (for example using standard token generation protocols like OAuth 2.0) and linked to the newly created authorisation identity. The token is subsequently issued to the device, allowing it to access the computing resources.

Unlike conventional methods, in which a token is typically associated with an identity of the user who initiated the process-thereby inheriting that user's potentially extensive set of permissions, because the authorisation token is instead linked to the specific authorisation process instance, it can therefore be linked with a more appropriately limited set of permissions.

Advantageously, this means that whilst conventional token-based authorisation techniques can be used-such as issuing a token against an identity assigned certain permissions and then using the token to access resources in accordance with the permissions assigned to the identity associated with the token-because the permissions assigned to the identity can be limited to those necessary for accessing the computing resources by the device, rather than encompassing a broader, more extensive set of permissions, the security risk posed by potential token misuse is significantly reduced.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram depicting a system in which a technique for authorising access to computing resources can be implemented, and
Figure 2 provides a ladder diagram providing a simplified depiction of a process for authorising access to computing resources in accordance with certain examples of the invention.

### Detailed Description

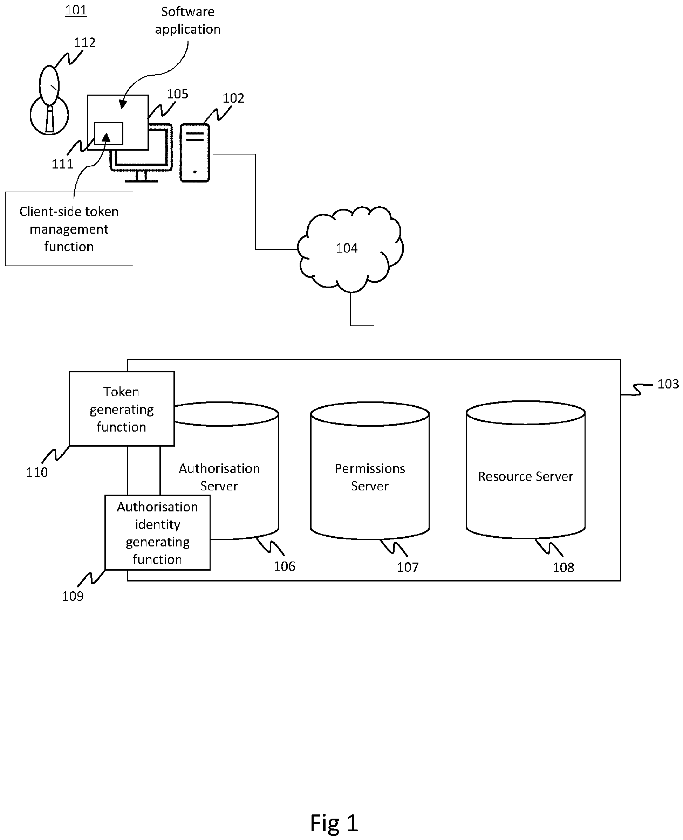

Figure 1 provides a simplified schematic diagram depicting a system 101 in which a technique for authorising access to computing resources can be implemented.

The system 101 comprises a user device 102 and a computing services system 103. The user device 102 and computing services system 103 are connected via a data network 104.

The user device 102 has running thereon on a software application 105. In this instance, the software application 105 is locally installed on the user device 102 (e.g. a "desktop application").

The computing services system 103 includes an authorisation server 106, a permissions server 107 and a resources server 108.

The software application 105 is configured to access computing resources provided by the resources server 108. Access to the computing resources provided by the resources server 108 is controlled by the authorisation server 106 and permissions server 107. The authorisation server 106 has running thereon an authorisation identity management function 109 and a token generating function 110. The software application 105 has incorporated therein a client-side token management function 111. The permissions server 107 has stored thereon various permissions sets which define sets of access permissions for accessing the computing resources provided by the resources server 108.

Typically, the authorisation identity management function 109, token generating function 110, and client-side token management function 111 are arranged to operate in accordance with an identity-based token management protocol, such as OAuth 2.0. However, it will be understood that the invention is not limited to OAuth 2.0 and can be applied to any suitable token-based security protocols, for example OpenID Connect (OIDC), Security Assertion Markup Language (SAML), JSON Web Token (JWT), Kerberos, WS-Federation, and eXtensible Access Control Markup Language (XACML).

In a typical example, the software application 105 might be a desktop installation of an accountancy software application intended for use by one or more operatives. Such accountancy software might typically need access to computing resources, such as accounting data and data processing services (e.g., invoice processing services, report generating services and so on) provided by the computing services system 103 and in particular hosted on the resources server 108.

When the software application 105 is first installed on the user device 102, an authorisation process is performed for establishing access to the computing resources by the software application 105 running on the user device 102.

This authorisation process is typically initiated by a user 112 at the user device 102. To initiate the process, the user provides suitable credentials (for example, a username and password) which, if linked to an identity with appropriate access rights, such as "administrator" privileges, triggers the authorisation process.

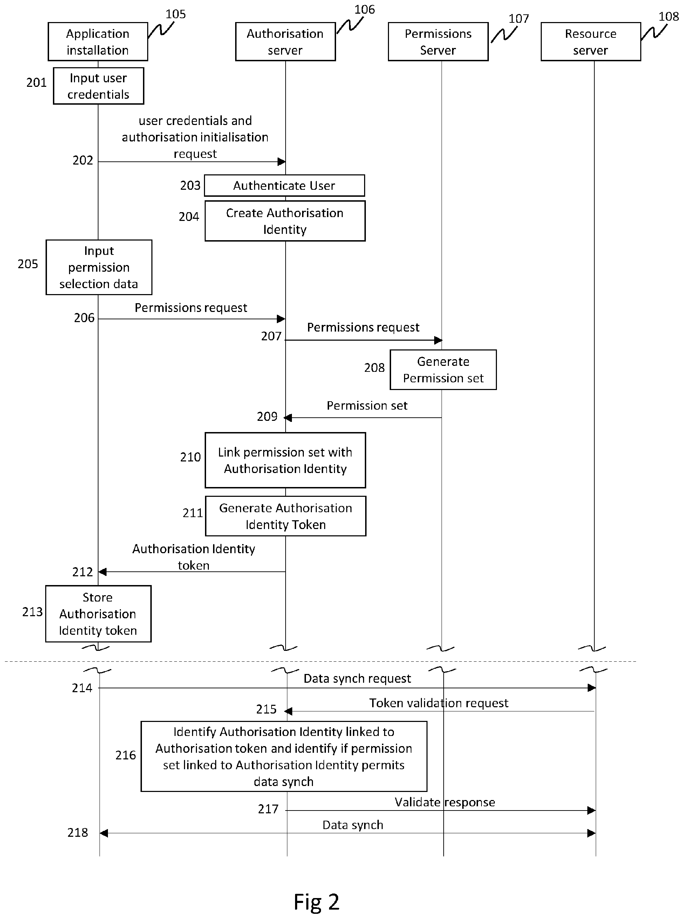

An example of this process is described further with reference to the diagram shown in Figure 2. Figure 2 provides a ladder diagram providing a simplified depiction of a process for authorising access to computing resources in accordance with certain examples of the invention.

At a first step 201, under the control of the software application 105, the user 112 inputs their credentials to the user device 102. Typically, this is via a suitable interface (for example one or more "set up pages") provided by the software application 105 and displayed on a display of the user device 102.

At a second step 202, typically responsive to selection by the user 112 of a suitable control (such as a "submit" button on the interface provided by the software application 105), and typically under the control of the client-side token management function 111, the user credentials are communicated via the data network 104 to the authorisation server 106 along with an authorisation initialisation request for establishing access to the computing resources provided by the resources server 108.

The authorisation initialisation request may be implicit in the sending of the user credentials, or may comprise specific data generated by the client-side token management function 111, for example, providing details of the nature of the software application 105, the user device 102, or any other suitable data associated with the request for the software application 105 running on the user device 102 to be granted access to the computing resources provided by the resources server 108.

At a third step 203, the authorisation server 106 verifies these credentials, and if they are valid, authenticates the user 112.

As the skilled person will understand, these credentials can be verified in any suitable way. This typically involves checking that the credentials provided by the user 112 match a user identity stored and maintained by the authorisation server 106. If the credentials align with an existing user identity, the server confirms the validity of the credentials and proceeds to authenticate the user.

As the skilled person will understand, the user credentials can be provided in any suitable way and may include: a username and password; two-factor authentication methods such as time-based one-time passwords, SMS or email-based codes, push notifications to a mobile device, or hardware tokens; biometric data including fingerprint, facial, iris, voice, or palm vein recognition; digital certificates, smart cards, security questions and answers, PIN codes, or single sign-on credentials; behavioural biometrics like keystroke dynamics, mouse movement patterns, or touchscreen gesture analysis; location-based authentication using GPS coordinates or IP address verification; and device-based authentication methods such as device fingerprinting or trusted device lists. This list is not exhaustive, and other suitable credential types may be employed as appropriate for the specific implementation and security requirements.

At a fourth step 204, authorisation identity management function 109 running on the authorisation server 106 then creates an authorisation identity.

The authorisation identity is associated with the authorisation initialisation request received at the second step 202.

Assuming the user credentials have been verified, at a fifth step 205, the user 112 inputs permissions selection data to the user device 102 which is indicative of the types of resource access (i.e. indicative of a subset of the computing resources provided by the resources server 108) the user intends the software application 105 running on the user device 102 to have.

For example, in an accounting software system, the types of resource access permissions that might be requested could include read access, where the user may request read-only access to specific datasets such as financial records, transaction histories, or client information maintained by the resources server 108.

Additionally, the user may require read and write permissions for certain datasets, allowing them to not only view but also modify, update, and synchronise data. Examples might include editing financial entries, updating client information, or adjusting transaction details in real-time.

Another example is API access, where the user might need access to certain APIs provided by the resources server 108. This could include APIs that offer data processing services such as automated invoice generation, expense tracking, or payroll management. The APIs typically provide programmatic access to perform specific functions or retrieve specific types of data.

The permissions selection data might be provided by the user selecting options from a menu presented on the interface provided by the software application 105, indicating the types of resource access the application may require. Even if all such permissions are selected, if the menu only provides options for permissions relevant to the operation of the software application 105, this inherently ensures that only permissions pertinent to the use of the application are granted.

At a sixth step 206, the permissions selection data is communicated from the user device 102 to the authorisation server 106 as permissions request data.

At a seventh step 207, the authorisation server 106 communicates the permissions request data to the permissions server 107.

At an eighth step 208, the permissions server 107 then identifies which specific permissions are necessary to provide access to the computing resources provided by the resources server 108 to fulfil the permissions request indicated by the permissions request data, and generates a corresponding permission set indicative of these permissions.

At a ninth step 209, permission set data indicative of the permission set is communicated from the permissions server 107 to the authorisation server 106.

At a tenth step 210, authorisation identity management function 109 stores the permission set data, and links it to the authorisation identity created at the fourth step 204.

At an eleventh step 211, the token generating function 110 generates an authorisation token and is configured to link the authorisation token to the authorisation identity. This authorisation token thus represents the authorisation identity. This is in contrast to conventional techniques in which such tokens are linked to, and thereby represent, user identities.

As will be understood, the token generating function 110 can link the authorisation identity to the authorisation token using any suitable technique. For example, this process may involve incorporating specific claims within the token that represent the authorisation identity, such as unique identifiers or role information. These claims can then be encoded into the token structure, using a standard format like JSON Web Token (JWT). For example, in certain embodiments, to facilitate the linking of the authorisation identity with the authorisation token, the token generating function 110 is configured to generate an authorisation instance identifier identifying the instance of the authorisation initialisation request received at the first step 201 and generate authorisation instance identifier metadata indicative of the authorisation instance identifier. The token generating function 110 is then configured to incorporate the authorisation instance identifier metadata with the authorisation identity token.

Similarly, in certain embodiments, the token generating function 110 is configured to retrieve identifier data associated with a user identity associated with the user credentials provided at the first step 201 (a user identity associated with the user 112) and generate user identifier metadata indicative of the user 112 associated with the user credentials. The token generating function 110 is configured to then incorporate the user identifier metadata with the authorisation identity token.

To ensure the integrity and authenticity of the token, the token generating function 110 may apply a cryptographic signature, typically using a private key held by the authorisation server 106. This signature allows a receiving server to verify that the token has not been tampered with and that it is linked to the intended authorisation identity.

In some implementations, the token may be further bound to the authorisation identity by including additional cryptographic data, such as a hash derived from specific context or session information. Such an approach helps ensure that the token is not only linked to the authorisation identity but is also valid within a particular context or session. The authorisation token may then be validated by a receiving server through a process that checks the embedded claims against stored records, ensuring that the token remains valid for the authorisation identity and has not expired or been revoked.

At a twelfth step 212, the authorisation token is communicated from the authorisation server 106 to the user device 102, and at a thirteenth step 213, under the control of the software application 105, and in particular the client-side token management function 111, the authorisation token is stored at the user device 102.

Once the authorisation is stored at the user device 102 in this way, it can be used by the software application 105 to make resource access requests to the resources server 108.

An example of this is depicted in the further steps shown below the dotted line in Figure 2.

In this instance, the software application 105 makes a data synchronisation request to synchronise data stored at the user device 102 with data (for example a particular data set of data records) stored at the resources server 108.

At a fourteenth step 214, the software application 105 communicates a data synchronisation request to the resources server 108.

Depending on the implementation of the technique, the request includes either the authorisation token received at the twelfth step 212, or (for example if the authorisation token received at the twelfth step 212 is a refresh token), an access token derived from the authorisation token). The request further comprises resource access request data specifying the nature of the synchronisation operation (e.g. read and write operations) and the data to which the synchronisation request relates.

At a fifteenth step S215, the resources server 108 communicates the authorisation token (or access token derived from the authorisation token) to the authorisation server 106 along with the resource access request.

At a sixteenth step 216 authorisation identity management function 109 identifies the authorisation identity (i.e. the authorisation identity created at the fourth step 204) linked with the authorisation token (or access token derived from the authorisation token) and then determines if the permission set linked with the authorisation identity comprises permissions permitting the requested data synchronising operation.

If authorisation identity management function 109 determines that the permission set linked with the authorisation identity does permit this operation, then at a seventeenth step 217, a validation response is communicated from the authorisation server 106 to the resources server 108, and at an eighteenth step 218, the resource access request is granted and the data synchronisation operation commences.

In certain implementations, the authorisation process depicted in Figure 1 can be further secured by use of a dynamic proof-of-possession mechanism, such as Proof Key for Code Exchange (PKCE) as defined in RFC 7636. PKCE enhances security for public clients, particularly mobile and single-page applications, by mitigating risks associated with authorisation code interception.

Typically, when implementing a mechanism such as PKCE, the process described the first step 201 and second step 202 would be modified as follows: Prior to the first step 201, the client-side token management function 111 generates a cryptographically random string known as a "code verifier" and derives from it a "code challenge" using a secure one-way function. The second step 202 is then augmented to include the code challenge in the authorisation initialisation request sent to the authorisation server 106, along with the user credentials and other necessary parameters. In a subsequent step (prior to the twelfth step 212), when the software application 105 exchanges the authorisation code for tokens, it includes the original code verifier in its request to the authorisation server 106. The authorisation server 106 then verifies that the received code verifier, when transformed using the same one-way function, matches the original code challenge before issuing the authorisation token. Such an additional mechanism provides a safeguard against attacks involving the interception of the authorisation code, as the attacker would also need to possess the code verifier to successfully exchange the code for tokens.

Returning to Figure 1, as the skilled person will understand, the components shown in Figure 1 can be manifested in any suitable way, for example, the user device 102 could be implemented as any suitable computing device such as a personal computer, a laptop, a tablet, a smartphone, a thin client, or even an loT device, depending on the specific use case. The software application 105 running on the user device 102 could take various forms, such as a locally installed desktop application, a web application accessed through a browser, a hybrid application that combines both local and web-based elements, or a virtual application streamed from a server or cloud environment. The data network 104 connecting the user device 102 and the computing services system 103 could be a local area network (LAN), a wide area network (WAN) such as the internet, a Wi-Fi network, or a mobile network like 4G or 5G.

The computing services system 103, which includes the authorisation server 106, permissions server 107, and resources server 108, could be implemented using various hardware and software configurations. For instance, the system might comprise on-premises servers, cloud servers, a hybrid cloud setup, virtual machines, or a containerised environment. The authorisation server 106 might be a dedicated identity server managing authorisation using a protocol like OAuth 2.0, an integrated security module within a larger application, or a cloud-based identity service. Similarly, the permissions server 107 could be a database server managing access permissions, a dedicated policy management server, or integrated with the authorisation server. The resources server 108 might manifest as a file server, an application server providing specific services, a database server hosting essential data, or a cloud storage service offering scalable access to resources.

The authorisation identity management function 109, hosted on the authorisation server 106, might be part of an identity management system, such as LDAP or Active Directory, or an integrated identity module within a broader enterprise system. The token generating function 110 could be implemented as an OAuth 2.0 authorisation server generating tokens, a JSON Web Token (JWT) service, or a custom token service designed for specific requirements. Finally, the client-side token management function 111, incorporated into the software application 105, might be an embedded token handler, an external library or SDK, or managed via browser-based mechanisms such as cookies or local storage.

These examples are not exhaustive but serve to illustrate the wide range of possible implementations that the components of the system 101 could take. The invention is not limited to these specific examples, and the skilled person will appreciate that other suitable manifestations can be used without departing from the scope of the invention.

Although embodiments described above have been largely presented in the context of accountancy software applications, the skilled person will appreciate that the principles of the invention are broadly applicable and can be used to authorise access to any suitable types of computing resources for any suitable software application running locally on a device. For instance, the invention could be applied to office productivity software, such as word processors or spreadsheets that require access to document storage and collaboration services. Similarly, it could be used in project management tools that integrate with remote task tracking or resource planning systems, customer relationship management (CRM) software that connects to cloud-based databases, or design and engineering applications that need access to rendering and simulation services hosted on remote servers. Additionally, enterprise resource planning (ERP) systems, which require integration with various business processes and databases, and communication platforms, such as email clients or messaging applications, that sync with centralised servers, are also within the scope of this invention. These examples are not exhaustive, and the invention is intended to cover any software application that requires secure, authorised access to remotely hosted computing resources.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A computer implemented method of authorising access to computing resources, said method comprising:
receiving, at a computing device, user credentials;
communicating, from the computing device to an authorisation server, the user credentials and an authorisation initialisation request for establishing access to the computing resources by the computing device;
verifying the user credentials at the authorisation server;
creating and storing, at the authorisation server, an authorisation identity which is associated with the authorisation initialisation request;
linking, at the authorisation server, a permission set of permissions to access the computing resources to the authorisation identity;
generating, at the authorisation server, an authorisation identity token representing the authorisation identity;
communicating the authorisation identity token from the authorisation server to the computing device and
storing the authorisation identity token at the computing device, such that, to request access to the computing resources:
the authorisation identity token or a token derived from the authorisation identity token is communicated from the computing device to a resources server with a resource access request, such that the resource server can authorise the resource access request by:
communicating the authorisation identity token or the token derived from authorisation identity token and the resource access request to the authentication server to determine if the permission set linked to the authorisation identity that is linked to the authorisation identity token, grants permissions that permit resource access in accordance with the resource access request, and if so
receiving from the authentication server a validation response in accordance with which the resources server can grant the resource access request.

2. A method according to claim 1, wherein the authorisation initialisation request is a request to initialise authorisation of a software application installed locally on the computing device to access the computing resources.

3. A method according to claim 1 or 2, further comprising:
retrieving, by the authorisation server, the permission set from a permissions server.

4. A method according to claim 3, further comprising:
receiving, at the computing device, permission selection data indicative of access to subset of the computing resources;
communicating the permission selection data to the authorisation server, and
retrieving, by the authorisation server, the permission set from the permissions server on the basis of the permission selection data.

5. A method according to claim 4, wherein the permission selection data is indicative of synchronisation access to a specified data set.

6. A method according to any previous claim, further comprising, at the authorisation server:
generating an authorisation instance identifier identifying the authorisation initialisation request;
generating authorisation instance identifier metadata indicative of the authorisation instance identifier, and
incorporating the authorisation instance identifier metadata with the authorisation identity token.

7. A method according to any previous claim, further comprising at the authorisation server:
generating user identifier metadata indicative of a user associated with the user credentials, and
incorporating the user identifier metadata with the authorisation identity token.

8. A method according to any previous claim, wherein the authorisation identity token is a refresh token with which the computing device can subsequently obtain an access token for requesting access to the computing resources.

9. A method according to any previous claim, wherein the authorisation identity token is issued in accordance with an identity-based token management protocol.

10. A method according to claim 11, wherein the token issuing protocol is one of OAuth 2.0, OpenlD Connect (OIDC), Security Assertion Markup Language (SAML), JSON Web Token (JWT), Kerberos, WS-Federation, and eXtensible Access Control Markup Language (XACML).

11. A computer system for authorising access to computing resources, said system comprising an authorisation server and a computing device, said computing device communicatively coupled to the authorisation server, wherein
said computing device is configured to receive user credentials and then communicate the user credentials and an authorisation initialisation request for establishing access to the computing resources by the computing device to the authorisation server, responsive to which, the authorisation server is configured to:
verify the user credentials;
create and store, an authorisation identity which is associated with the authorisation initialisation request;
link a permission set of permissions to access the computing resources to the authorisation identity;
generate an authorisation identity token representing the authorisation identity;
communicate the authorisation identity token to the computing device, responsive to which the computing device is configured to store the authorisation identity token, such that, subsequently the computing device can request access to a computing resource by:
communicating the authorisation identity token or a token derived from the authorisation identity token to a resources server with a resource access request, and the resource server can authorise the resource access request by:
communicating the authorisation identity token or the token derived from authorisation identity token and the resource access request to the authentication server, whereupon the authentication server can:
determine if the permission set linked to the authorisation identity that is linked to the authorisation identity token grants permissions that permit resource access in accordance with the resource access request and if so,
communicate a validation response to the resources server in accordance with which the resources server can grant the resource access request.

12. A computer system according to claim 11, wherein the authorisation initialisation request is a request to initialise authorisation of a software application installed locally on the device to access the computing resources.

13. A computer system according to claim 11 or 12, wherein the authorisation server is communicatively connected to a permissions server, and the authorisation server is configured to retrieve the permission set from a permissions server.

14. A computer system according to claim 13, wherein the computing device is further configured to:
receive permission selection data indicative of access to subset of the computing resources;
communicate the permission selection data to the authorisation server, and the authorisation server is further configured to:
retrieve the permission set from the permissions server on the basis of the permission selection data.

15. An authorisation server for use in a computer system according to claim 11, said authorisation server configured to:
receive, from a computing device, user credentials and an authorisation initialisation request for establishing access to computing resources by the computing device;
verify the user credentials;
create and store, an authorisation identity which is associated with the authorisation initialisation request;
link a permission set of permissions to access the computing resources to the authorisation identity;
generate an authorisation identity token representing the authorisation identity and
communicate the authorisation identity token to the computing device for storage at the computing device, and, subsequently, on receipt of the authorisation identity token, or a token derived from authorisation identity token, and the resource access request from a resources server, the authorisation server is configured to:
determine if the permission set linked to the authorisation identity that is linked to the authorisation identity token grants permissions that permit resource access in accordance with the resource access request and if so,
communicate a validation response to the resources server in accordance with which the resources server can grant the resource access request.
